## Europäisches Patentamt
## European Patent Office
## Office européen des brevets

(11) Publication number:

**0 066 421**
**B1**

(12) **EUROPEAN PATENT SPECIFICATION**

(45) Date of publication of patent specification: **07.01.87**

(21) Application number: **82302570.5**

(22) Date of filing: **20.05.82**

(51) Int. Cl.⁴: **C 02 F 1/52, C 02 F 1/54**

(54) **Purification of water.**

(30) Priority: **21.05.81 ZA 813427**
**30.06.81 ZA 814437**
**18.09.81 ZA 816505**

(43) Date of publication of application:
**08.12.82 Bulletin 82/49**

(45) Publication of the grant of the patent:
**07.01.87 Bulletin 87/02**

(84) Designated Contracting States:
**BE DE FR GB IT NL SE**

(56) References cited:
**DE-A-2 527 987**
**GB-A-1 381 678**
**GB-A-1 382 537**
**US-A-3 350 304**
**US-A-3 428 558**
**US-A-3 515 666**

(73) Proprietor: **Buchan, Pieter Walter William**
**68, Second Street Linden**
**Johannesburg Transvaal Province (ZA)**

(72) Inventor: **Buchan, Pieter Walter William**
**68, Second Street Linden**
**Johannesburg Transvaal Province (ZA)**
Inventor: **Buchan, Leon**
**Rietfontein 28**
**Kameeldrift District Transvaal Province (ZA)**

(74) Representative: **Hale, Stephen Geoffrey et al**
**J. Y. & G. W. Johnson Furnival House**
**14/18 High Holborn**
**London WC1V 6DE (GB)**

**The file contains technical information
submitted after the application was filed and
not included in this specification**

## Description

This invention relates, broadly, to the purification of water. More particularly, this invention relates to a composition for purifying water, suitable for, but not limited to, the use of the composition in tablet form for the batchwise purification of water to improve its suitability for human use.

US—A—3 515 666 deals with a water purification composition which functions by the interaction of a phosphate matrix (coagulant), a polyelectrolyte and a metallic salt such as ferric chloride, and the exact amounts of each to be used depends on various factors, e.g. the hardness of the water. The composition can be used for treating large volumes of water, e.g. in a water plant, and the provision thereof in unit dosage form for treating relatively small volumes of water is not taught.

US—A—3 350 304 teaches a water treatment composition comprising pyrophyllite, alkali metal aluminate, polyvalent metal sulphate, digestible natural gum, and, as an essential ingredient, a non-expanding clay.

GB—A—1 381 678 deals with a water-cleansing composition which includes (i) sodium tripolyphosphate sprayed with sodium hydroxide or sodium hexametaphosphate sprayed with sodium hydroxide, (ii) sodium aluminate, and (iii) chlorocyanuric acid.

US—A—3 428 558 teaches a composition for treating water, which comprises, inter alia, a water-soluble high molecular weight solid polymer and a solid gasogenic agent for dispersing the polymer, the gasogenic agent comprising an admixture of an acidic compound and a $CO_2$ releasing compound.

DE—A—2 527 987 teaches a water purification composition which includes a colloid but not in combination with a coagulant and in unit dosage form.

GB—A—1 382 537 teaches a water purification composition comprising an alkaline earth metal halide, iron (III) halide, an alkali metal aluminate and a polyacrylamide, but not in unit dosage form or that the polymer should hydrate more slowly than the coagulant.

GB—A—703 964 teaches adding to contaminated water, a coagulating agent such as aluminium sulphate and a coagulating aid which is a cellulose derivative. However, it does not teach that the composition can be added in unit dosage form, nor does it teach that the cellulose should hydrate a slower rate than the aluminium sulphate.

According to the invention, there is provided a composition, in unit dosage form, for the single step batch purification of a relatively small predetermined volume of water and including, in admixture with one another, a combination of a solid inorganic metal salt having a trivalent cation, and a solid alkali which is soluble in water, as coagulants, for rapidly coagulating solid impurities disposed in water to form primary flocs, and less than 10% by mass of a solid anionic polymeric hydrophilic colloid, characterized in that the colloid is capable, when dispersed in the water, of hydrating to form a sol for aggregating the primary flocs, and hydrates at a slower rate than the rate of formation of the flocs.

It will be appreciated that the composition, whether in powder, granular or tablet form as described hereunder, will be used at a required, desired or intended dosage rate, a specific quantity of composition being added to a specific volume of water to be purified. The dosage rate will be determined by the purity of the water to be purified, and by the purity required for such water after purification, and will be set by the amount of coagulant necessary to be introduced to the water to achieve this purification. In adding sufficient composition to the water to provide the necessary coagulant, it is critical not to add too much organic hydrophilic colloid at the same time. The reason for this is that an excess of hydrophilic colloid leads to rapid gel formation in the water, inhibiting coagulant dispersal in the water and inhibiting floc formation, thereby rendering the composition substantially useless for its intended purpose. It is thus essential to limit the ratio of organic hydrophilic colloid to coagulant in the composition to such values where the colloid does not interfere with coagulant dispersal or floc formation. This ratio will depend on the coagulant and colloid in question, and to a certain extent on the purity of the starting water and its intended use after purification. However, the Applicant has found that the proportion of colloid in the composition should be such that, when sufficient composition has been added to the water to provide the necessary quantity of coagulant for floc formation, the quantity of colloid in water should not exceed 50 mg/l, and is usually about 10 mg/l.

The coagulant may be such that the flocs, which are formed when it is dispersed in the water, are electrically charged, and the hydrophilic colloid may be such that the sol which is formed when it is dispersed in water, is electrically charged and has a charge opposite to that of the flocs.

The composition may include a further (secondary) hydrophilic colloid capable, when dispersed in the water, of absorbing large quantities of water to form a secondary sol to assist the original (primary) sol in the aggregation of the flocs, the proportions of original (primary) and secondary hydrophilic colloids in the composition together being such that when the composition is used to purify the intended quantity of water, the colloids together do not interfere with coagulant dispersal in the water or with floc formation.

The total proportion of colloid present should thus be such that when sufficient composition has been added to water to be purified to provide the necessary quantity of coagulant for floc formation, the total quantity of colloid in the water should not exceed 50 mg/l.

The secondary colloid may also be such that the secondary sol which is formed when it is dispersed in the water, is electrically charged. This charge may be the same as and preferably opposite to that of the primary sol.

The secondary colloid may typically be in the form of a suitable polyelectrolyte. The polyelectrolyte may be a high molecular weight, water-soluble, synthetic organic flocculating material having non-ionic, anionic or cationic properties, such as polymers of amino or acrylic monomers and the polyelectrolyte may have a molecular weight of at least 100 000, but preferably 1 000 000, or higher.

Substances which have polyelectrolyte properties, such as casein, modified starches and celluloses, and gelatine, or non-ionic substances such as hydroxy ethyl- or propylcellulose which, together with the primary hydrophilic colloid give a synergistic increase in the aggregation of the flocs, can be suitable as secondary hydrophilic colloids, provided that they are used at a pH which gives their sol the required electric charge.

The coagulant is selected, bearing in mind the nature of the water for which it is intended, e.g. its pH, temperature, the proportion and nature of the solid impurities disposed therein, concentration of humic substances therein, etc., so that the coagulant acts with the prescribed quantity of water for which it is intended, to form said flocs which are preferably electrically charged. The primary hydrophilic colloid in turn may be selected to provide in the same quantity of the same type of water, an electrically charged sol having a charge opposite to that provided on the flocs by the coagulant. The particles of the primary sol are attracted to and aggregate with the flocs to provide rapid floc size increase leading to rapid and thorough clarification of the water in question. The primary hydrophilic colloid thus acts in a primary sense to promote the clarification of water which has been coagulated by the coagulant (hence the term "primary" hydrophilic colloid).

Use of the secondary hydrophilic colloid further promotes rapid clarification of the water in question, by providing a secondary sol which aggregates with the primary sol, for rapid floc aggregation and size increase. The particles of the secondary sol aggregate with the particles of the primary sol, simultaneously with aggregation of the flocs produced by the primary flocs with the primary sol, and for this reason a secondary colloid which provides a sol of opposite charge to the primary sol is preferred.

In other versions of the invention, the primary and secondary colloids may, however, be such that electrically neutral primary and secondary sols respectively are formed when they are dispersed in the water, and the same applies to the coagulant, which can be selected to provide uncharged flocs.

The secondary colloid will also be selected, and its proportion in the composition will be determined, together with the proportions of the coagulant and primary colloid, bearing in mind the quantity of water and the nature of the water for which it is intended. The secondary colloid will be selected so that, when dispersed in the water in question, it provides the required proportion of the secondary sol of the required charge, which may be neutral, the same, or preferably opposite, to that of the primary sol.

Typically, the composition will be used for batchwise treatment of relatively small quantities of water for human use, and the composition may thus be contained in a sachet or the like, or, as described hereunder, is preferably in the form of a tablet.

The inorganic metal salt may comprise aluminium sulphate, ferric sulphate, chlorinated copperas, sodium aluminate, or the like, with aluminium sulphate being preferred.

Ground surface waters, such as water obtained from rivers and dams, or even wells, often have suspended solid impurities which are organic in nature and are negatively charged. A coagulant such as aluminium sulphate wherein the cations combine with available hydroxyl ions to form charged primary flocs by coagulation of suspended solids thereby to clarify the water slowly, is thus suitable, if used in excess, to provide flocs which are substantially positively charged. In this regard, all the flocs need not be charged, but only a substantial proportion thereof, and they need not all be charged to the same extent.

The primary colloid may thus be selected to form a neutral or negatively charged sol and may be a polyelectrolyte. The primary colloid may be a modified polysaccharide (e.g. modified starch), modified cellulose (e.g. carboxy methyl cellulose), a protein (e.g. casein), or a gum (e.g. gelatine). Preferably, the primary colloid is carboxymethyl cellulose (or an acceptable salt thereof).

The composition may include a clay, such as bentonite, and may also include an inorganic compound such as activated silica (sodium silicate), silica gel or similar silica-based products of the type which rapidly absorb water and are used as desiccants and which may be synthetically produced, highly water-absorbent, and markedly swellable upon water absorption, such as the products available under the trade mark SYLOIDS from W. R. Grace S.A (Pty) Ltd. These substances are swelling agents which can act to aid in tablet disintegration and can also act as secondary colloids.

Mixtures of two or more of the above primary colloids can be used, and it should be borne in mind that the nature of the charge of the sol produced thereby can vary depending on the pH of the water so that in certain instances it may be necessary to include a pH-modifying agent, such as one of the common acids or bases, in the composition to ensure the correct pH for proper functioning of the primary colloid. Usually, the pH-modifying agent will be a base such as calcium hydroxide, sodium carbonate or, preferably, sodium bicarbonate.

Without being bound by theory, the Applicant thus believes that the primary and secondary colloids act synergistically in impure water to provide nucleation or aggregation centres for floc aggregation which adhere to and combine with the primary flocs to provide large and rapid settling floc aggregates for quick and effective water clarification. To this extent even hydrophilic colloids which provide neutral sols can act as aggregation or nucleation centres for floc size increase.

The Applicant further believes that the mechanism whereby the coagulant and the hydrophilic colloids function may be by cross-linking of the molecules of the hydrophilic colloids in the presence of the coagulant, which results in gel formation and subsequent precipitation of the gelled flocs. As mentioned above, the proportion of colloid present in the composition should be limited to prevent sol formation from interfering with coagulation. The Applicant thus believes that it is important that, as mentioned hereinbefore, the coagulant should dissolve and act to form flocs (e.g. when aluminium sulphate reacts with hydroxyl ions available in the water) at a rate which is more rapid than the rate at which colloids hydrate to form sols. This results in effective distribution of the coagulant throughout the solution which is necessary for initial coagulation and formation of primary flocs, prior to sol formation and precipitation by the colloids as described above. Thus, the colloids should hydrate at a slower rate than the formation of the primary flocs, and after formation of the primary flocs they are aggregated by the hydrated sols, i.e. in the gels. The polyelectrolytes, it is believed, also hydrate relatively slowly and promote formation of the sols.

The sols thus provide bases for rapid floc growth, and for this reason combinations of hydrophilic colloids with essentially opposite charges are preferred, but while the secondary colloids will generally be cationic or anionic, nonionics are also regarded as suitable.

The composition of the invention will thus have the proportions of its coagulant, and primary and secondary colloids selected so that flocs are rapidly produced when the composition is added in the appropriate amount for the quantity of water to be treated, the proportion naturally increasing with increased impurity of the water as regards suspended solids. However, the Applicant has found that the dosage is not critical, and a single formulation (e.g. 500 mg tablet per litre of water) has been found effective with all water tested, provided that the colloid, as mentioned above, never reaches more than 50 mg/l in the water. The dosage can easily and rapidly be determined by experiment, simply by continuing to add the composition until enough or a slight excess has been added, whereupon rapid clarification is achieved.

If the water is intended for human consumption, its constituents will naturally be selected so as to be non-toxic in the quantities used, but when the water is merely to be clarified for purposes such as washing, a wider selection of constituents will become available. A further aspect to be borne in mind is that the gelatinous nature of the gel which can be formed by aggregation of the colloids can limit the choice of constituents, as the sediment or scum obtained should not be too gelatinous or slimy, as this can complicate separation.

The composition hereinbefore described can be used to clarify water by dispersing it in the water to be treated to flocculate suspended solid impurities, and separating the flocs from the clarified water, the quantity of composition added being such that the quantity of colloid in the water does not exceed 50 mg/l.

The Applicant has found that efficient and rapid dispersion of the composition in the water is important to prevent the formation of gel lumps. Thus, while in the batchwise treatment of water a particulate composition, e.g. in sachets, can be dispersed effectively, care is needed in this, and a granulated composition would be more suitable. It is, however, preferred rather to use a tablet formulated to disintegrate rapidly and effectively in the water. This is the preferred form for use with unskilled or illiterate users.

The dispersion may be effected by rapid stirring of the water to promote coagulation or flocculation. Thereafter, the water should be stirred intermittently, to provide for aggregation flocs and to promote large and rapid settling flocs. Once the flocs have settled, the clean water may be decanted or filtered. Said settling can be aided by centrifugation.

When the composition is in the form of a tablet, it may include an effervescent for providing effervescence when the tablet is dropped in water. Thus, depending on the coagulant used, the composition can contain a suitable carbonate or bicarbonate of an alkali metal or alkaline earth metal, capable of reacting with the coagulant in an aqueous environment to produce carbon dioxide effervescence and to promote disintegration of the tablet in water to disperse the composition of the tablet in the water.

For tabletting, the coagulant is preferably in granular or powdered form prior to tabletting, and the carbonate or bicarbonate may be a powder such as sodium bicarbonate, with sodium bicarbonate being preferred because of its ready availability at acceptable cost, and acceptable taste and fitness for human consumption. In addition to providing effervescence for tablet dispersion, the carbonate or bicarbonate will generally be highly soluble in water, so that it can leach rapidly from the tablet to render the tablet porous and to provide for water access to the reactive surfaces of other components in the tablet for rapid disintegration. The carbonate or bicarbonate can be important (depending on the pH of the water treated) for the production of hydroxyl ions in the water to promote coagulation by the other coagulant, by the formation of the hydroxide of the metal ions in the other coagulant. Other readily leachable acid salts of alkali metals or alkaline earth metals, such as potassium or lithium carbonate or bicarbonate, may be included in the composition, for promoting tablet disintegration. In tabletting, a substance such as calcium hydroxide is not suitable for the production of hydroxyl ions, as they are released too slowly and gelation occurs prematurely.

·When the composition of the invention is for producing purified water for human consumption, the tablet may include a suitable bactericide, which may be a source of chlorine or iodine. A source of organochlorine such as a cyanurate or halazone (para para dichloro sulphamoyl benzoic acid), or a source of organo-iodine, such as tetraglycine hydroperiodide, or an inorganic chlorine source, such as a suitable hypochlorite can be included. Preferably, the source should be fast-dissolving. Lithium hypochlorite or calcium hypochlorite has been used by the Applicant, the latter being preferred for its free availability, and it is preferably, like the coagulant, granular, to aid in tabletting.

For tabletting, it should be noted that several of the primary colloids mentioned above have additional advantages. Thus, certain of them are strong adsorbents of flocs produced by the coagulant, and of bacteria and other suspended solid impurities, and combinations of certain of these primary colloids can be synergistic in this regard. Bentonite and the Syloids (trade mark) which may be included in the composition, can also have at least some of these properties. Furthermore, those hydrophilic colloids used which are rapid absorbers of large quantities of water to act as swelling agents to provide rapid swelling, can aid markedly in tablet disintegration.

Bentonite (which is also a swelling agent to promote rapid tablet disintegration) or polyethylene glycol (which is also a hydrophilic colloid and a tablet lubricant), may be added to the composition for tabletting, as a binder. A further swelling agent, such as activated alum, containing aluminium sulphate and some clay particles, and being activated in that it contains a relatively reduced proportion of water of hydration, may also be added to the composition for tabletting.

A formulation which the Applicant has used successfully on a large variety of waters includes aluminium sulphate as the coagulant, sodium bicarbonate as effervescent, coagulant and alkali in a proportion so that the tablet, when used·with the prescribed amount of water, provides a pH of about 5,5 to 6,0, carboxymethyl cellulose as the primary colloid, bentonite as an additional substance (having the primary functions of being a lubricant and binder for tabletting and a rapid swelling water absorber for tablet disintegration, but which also acts as an adsorbent of pollutants, an inorganic substance unaffected by chlorine and a weighting agent to weight down flocs which have entrained air, thereby to assist the flocs in settling), a suitable SYLOID (trade mark), primary as a dispersant but also as a potential adsorber of pollutants, and as a secondary colloid, a polyelectrolyte such as that available under the trade mark MAGNAFLOC LT25 (anionic) or MAGNAFLOC LT20 (non-ionic), available from Allied Chemicals SA (Proprietary) Limited. Halazone is the preferred bactericide. The Applicant has found that in practical formulations of the composition the primary colloid can comprise, in addition to, or instead of, the carboxy methyl cellulose, other hydrophilic colloids such as modified starches, modified celluloses, gelatine. The suitability of these compounds is determined by their suitability for a particular water, which is in contrast to hydrophilic colloids such as carboxy methyl cellulose, which has been found effective for all waters tested. The secondary colloid, depending on its pH, can also be casein, hydroxy ethyl cellulose or hydroxymethyl cellulose, or other suitable polyelectrolytes.

The Applicant believes that, in addition to killing of bacteria by the bactericide, physical separation of bacteria from the water takes place because of entrapment or adsorption of the bacteria in or to the flocs or gel produced, reducing the bacterial count of the water. The Applicant has also found that there is a rapid separation of organic suspended solids from the water in question, and this separation of organic material and bacteria allows a relatively low level of chlorine to be used, enhancing the acceptability of the clarified water for human consumption.

Generally, the tablet according to the invention will be formulated for treating water of a certain type, e.g. river water, for a certain purpose, e.g. drinking or washing, and the components and proportions thereof will be selected accordingly. It is contemplated that tablets of various weights or sizes will be made, each intended to treat a particular volume of water. Where effective function of certain constituents of the tablet is pH-related, the constituents and their proportions will be selected so that when the tablet is used with the prescribed volume of the water which it is intended to purify, a suitable pH is attained. This will usually be in the range 5,0—7,5 e.g. about 6,0, but when certain components act optimally at different pH's, some compromise will be required. If an increase in pH is required, a suitable alkali, e.g. sodium carbonate (which can provide effervescence), may be added to the tablet, and as the coagulant is usually acidic, no special steps to decrease the pH are ever expected to be needed. Usually, however, the carbonate or bicarbonate used with the coagulant should result in a pH of a suitable value.

Typically, tablets according to the invention will be packed in packages of synthetic plastics material to keep them dry. The tablets will be used by persons, such as the military, who are outdoors or remote from treated water supplies, to treat water from rivers, dams, wells, or the like. Generally, water will be treated on a batch basis, e.g. a bottle, drum, tank or reservoir of water will have the appropriate mass of tablets added thereto, to cause flocculation and, if desired, sterilization for consumption. After clarification, the water may be left for a sufficient time or treated to remove any objectional smell or taste, e.g. residual excess chlorine removable with activated carbon, and may be decanted and then filtered to remove floating flocs or sediment.

The tablet, in a single operation, can both clarify and sterilize water to remove colloids or other suspended material contained therein, and to kill bacteria or the like potentially disease-causing organisms. Swirling, stirring, or shaking the water can accelerate tablet disintegration and dispersion of its constituents in the water for rapid purification, and particularly when the water is not needed for drinking, simple settling of sediment, or skimming, if necessary, may be sufficient, without filtration.

The Applicant has found that the constituents of the formulation can easily be mixed mechanically to obtain a homogeneous blend which can easily be pressed into tablets in a conventional tabletting machine. A suitable general purpose tablet can contain about 40% by mass bentonite, 30% by mass of aluminium sulphate, about 20% by mass of sodium bicarbonate, about 5% by mass of halazone or hypochlorite, about 2% by mass of primary colloid, preferably carboxy methyl cellulose in the 7H (trade mark of Hercules Inc.) range, i.e. having a degree of substitution about 0,7 and a high viscosity, about 2% by mass of SYLOID (trade mark) as dispersant and desiccant, and 0,15% by mass of polyelectrolyte.

The applicant has found that the optimal concentration of carboxymethyl cellulose in the tablet is about 2% by mass. At a concentration of about 5% by mass, dissolution of the tablet is impaired by gel formation around the tablet (preventing coagulant dispersion and floc formation). At a concentration of about 10% by mass, substantially no dissolution takes place due to said gel formation.

While the tablet can be formulated without SYLOID (trade mark), the Applicant has found that most effective results are obtained where SYLOID (trade mark) is used, as a result of the synergistic effect of the other colloids and the SYLOID (trade mark), and as a result of improved dispersal.

Typically, a tablet or tablets can be added to a batch of water to be treated at a dosage rate of about 500 mg composition per litre of water. Immediate effervescence is obtained, coupled with rapid (within 30 seconds) total disintegration of the tablet. Rapid floc formation and growth takes place, and, with gentle swirling of the water, floc formation proceeds to completion with large flocs which settle or float, within a further 2 to 3 minutes after disintegration. This water can then be filtered, e.g. through a domestic (bathroom) towel or the like, and has been found, apart from a slight smell of chlorine which dissipates rapidly or can be removed by activated carbon, to be fit for human consumption. This was tested on water drawn from a stream immediately downstream of a sewage outlet which, after treatment, was found to be drinkable.

Subject to certain constraints, such as a pH at which the constituents will perform the intended functions, the proportions of the constituents can be varied between limits.

In tests conducted with the invention by the South African Bureau of Standards, clarified water with 1,50 ppm chlorine in the supernatant has had its bacterial count reduced from 224 000/ml to 2/ml in about 20 minutes, after addition of a tablet as hereinbefore described, to the appropriate quantity of water. Coliforms from faecal contamination were reduced from 1800/ml to zero in about 20 minutes, and it is believed that a particular advantage of the invention is that the effective and rapid floc formation leading to physical separation of bacteria from the water, materially assists in the reduction in bacterial count, at the low chlorine levels used. Further tests with chlorine in the supernatant at 1,5 ppm reduced the bacterial count from 130 000/ml to 5/ml in about 10 minutes.

The Applicant regards as an important advantage of the invention the fact that water can be rapidly and effectively clarified using acceptably low concentrations of polyelectrolytes, as some of these can be potentially toxic in high concentrations (especially with regard to free acrylamides contained therein), with generally accepted levels being 0,5 to 1 mg/l.

The invention will now be described with reference to the following non-limiting illustrative Examples:

Example 1

A 500 mg tablet for treating one litre of water typically has the following formulation, in parts by mass:

| Parts by Mass | Constituent |
| --- | --- |
| 3 | Aluminium sulphate (granular) |
| 4 | Bentonite (powder) |
| 2 | Sodium bicarbonate (powder) |
| 0,3 | Calcium hypochlorite (granular) or halazone |
| 0,2 | Grade 7H0F or 7H3SF (trade marks) sodium carboxymethyl cellulose powder ex Hercules Inc.) |
| 0,2 | SYLOID 224 (trade mark) (powder ex WR Grace SA (Pty) Ltd.) |
| 0,03 | MAGNAFLOC LT20 (trade mark) (powder ex Allied Chemicals SA (Pty) Ltd.) |
| 0,2 | Polyethylene glycol 600 (powder) |

Example 2

A 10 g tablet for treating 20 litres of water, typically has the following formulation in parts by mass;

| Parts by Mass | Constituent |
|---|---|
| 3 | Aluminium sulphate (powder) |
| 4 | Bentonite (powder) |
| 2 | Sodium bicarbonate (powder) |
| 0,3 | Calcium hypochlorite (granular) or halazone |
| 0,2 | Grade 7H0F or 7H3SF (trade marks) sodium carboxymethyl cellulose (powder ex Hercules Inc.) |
| 0,2 | SYLOID 224 (trade mark) (powder ex WR Grace SA (Pty) Ltd.) |
| 0,015 | MAGNAFLOC LT20 (trade mark) (powder ex Allied Chemicals SA (Pty) Ltd.) |
| 0,2 | Polyethylene glycol 600 (powder) |

In the Examples, the carboxymethyl cellulose can be replaced with the same quantity of casein, in which case the MAGNAFLOC LT20 (trade mark) will be replaced with the same quantity of MAGNAFLOC LT25 (trade mark). Also, the polyelectrolyte (MAGNAFLOC LT20) can be replaced with 1% (by mass) hydroxy ethyl cellulose.

The constituents in the Examples were mixed mechanically to obtain a homogeneous blend. Tablets were pressed therefrom, using a conventional tabletting machine. The tablets were tested on river water from the Apies River in the Pretoria district, drawn immediately downstream of a sewage outlet. The composition in tablet form (which could also be used as a powder, e.g. in sachet form), was added to either a one litre or a 20 litre sample of the river water, which had a high suspended solids/colloids content and a high probability of contamination by disease-bearing organisms from the sewage, the addition being in a quantity equivalent to 170 mg AlSO$_4$/l water. Immediate effferversence was noted, coupled with rapid total dispersion of the constituents. Rapid floc formation and growth took place, and with gentle swirling of the water floc formation had proceeded to completion with large stable flocs which settled or floated to the top of the water within a further 2—3 minutes after dispersion, in the case of the 1 litre sample of water, and 8—10 minutes after dispersion in the case of a 20 litre sample of water. The water was filtered through a domestic (bathroom) sponge and was found, apart from a slight smell of chlorine which dissipated rapidly, or could be removed with activated carbon, to be fit for human consumption; it was in fact consumed with no ill effects.

It will be appreciated that the formation may be varied, as regards types of constituents and proportions thereof, within limits, without departing from the invention, depending on what is desired for the composition in question. Thus, using as a basis a quantity of coagulant which is fixed for the anticipated flocculation load—

— the proportion of carbonate or bicarbonate for effervescence can be varied from a minimum set by the lowest acceptable dispersion time and a maximum (for fast dispersion) set by objectionable taste (e.g. for NaHCO$_3$), or the like;

— the proportion bactericide, if any, will have a minimum determined by the proportion needed for effective water sterilization and can vary over a wide range;

— for tablet, the binder (e.g. bentonite) will have its minimum determined by the proportion needed for effective tabletting and tablet strength;

— the properties of polyvinyl glycol can be varied, but when it is present in the composition in an amount in excess of about 1,5% by mass, a milky white haze is formed in the water;

— the proportion of silica swelling agent will have its minimum set by the proportion required for effective swelling and its maximum set by the proportion which interferes with tablet binding, bearing in mind that it also can act as a flocculation aid; and

— the proportion of activated alum (if used) will be set according to similar considerations to the swelling agent, bearing in mind that it has a dual function as a swelling agent and as a flocculation aid, and bearing in mind that an excess of both swelling agent and/or alum can lead to unacceptable tablet brittleness.

In every formulation the proportions of constituents are limited also by the requirement that the treated water, in the prescribed quantity, must have a pH falling within a range such that all the constituents can perform their intended functions, particularly the coagulant and disinfectant; and (for tablets) so that, in combination, when the carbonate or bicarbonate leaches out of the tablet and reacts with the coagulant, rapid, easy access to the reactive surfaces of the swelling agent(s) (silica swelling agent, binder, and/or clay) used for rapid and effective disintegration is obtained.

In cases where the composition is used in powder form and contains carboxymethyl cellulose, the powders can be in granulated form to effect efficient dispersal thereof.

## Claims

1. A composition, in unit dosage form, for the single step batch purification of a relatively small predetermined volume of water and including, in admixture with one another, a combination of a solid inorganic metal salt having a trivalent cation, and a solid alkali which is soluble in water, as coagulants for rapidly coagulating solid impurities dispersed in water to form primary flocs, and less than 10% by mass of a solid anionic polymeric hydrophilic colloid, characterised in that the colloid is capable, when dispersed in the water, of hydrating to form a sol for aggregating the primary flocs, and hydrates at a slower rate than the rate of formation of the primary flocs.

2. A composition according to claim 1, characterised in that the solid inorganic metal salt having a trivalent cation is selected from aluminium sulphate, ferric sulphate, chlorinated copperas and sodium aluminate.

3. A composition according to claim 1 or 2, characterised in that the solid anionic polymeric hydrophilic colloid is selected from polysaccharides, modified cellulose, proteins and gums.

4. A composition according to claim 1, characterised in that aluminium sulphate is present as solid inorganic metal salt having a trivalent cation and carboxymethylcellulose or an acceptablesalt thereof is present as solid anionic polymeric hydrophilic colloid.

5. A composition according to any of claims 1 to 4, characterised in that it includes a further secondary polymeric hydrophilic colloid which is a solid non-ionic or anionic organic polymeric hydrophilic colloid capable, when dispersed in the water, of forming a secondary sol to assist the original primary sol in the aggregation of the coagulated impurities, and which also hydrates at a slower rate than the rate of formation of the primary flocs.

6. A composition according to any of claims 1 to 5 characterised in that it contains a bactericide in a proportion of about 5% by mass of disinfecting the water and/or a suitable further swelling agent in an amount of about 40% by mass to act as a filler and/or binder for tabletting, thus reducing gelling of the anionic polymeric hydrophilic colloid.

7. A composition according to any of claims 1 to 6, characterised in that it is in the form of a tablet and the alkali is sodium bicarbonate which also acts as an effervescent for providing effervescence when the tablet is introduced into water, to promote tablet disintegration.

8. A composition according to claim 1, characterised in that it comprises

aluminium sulphate, about 30% (by mass)

sodium bicarbonate (powder), about 20% (by mass)

bactericide, about 5% (by mass)

anionic modified cellulose such as 7H0F and 7H3SF (trade name) available from Hercules Inc., about 2% (by mass)

bentonite as further swelling agent, about 40% (by mass)

amorphous silica compound as a further swelling agent (e.g. SYLOID — trade name), about 2% (by mass)

non-ionic synthetic polymer (e.g. polyacrylamide) as secondary hydrophilic colloid, up to 0.15% (by0mass).

9. The use of a composition according to any of claims 1 to 8 for the single step batch purification of a relatively small predetermined volume of water.

10. The use according to claim 9, characterised in that the composition is used in an amount such that solid impurities in the water are coagulated to form primary flocs and the concentration of the colloid derived from the composition in the water is about 10 mg/litre.

**Patentansprüche**

1. Zusammensetzung in Dosiereinheitsform zur einstufigen diskontinuierlichen Reinigung verhältnismässig kleiner, vorbestimmter Wasservolumina, ferner enthaltend als Gemisch miteinander eine Kombination eines festen anorganischen Metallsalzes mit dreiwertigem Kation und eines festen wasserlöslichen Alkalis als Koagulationsmittel zur raschen Koagulation im Wasser dispergierter fester Verunreinigungen unter Bildung primärer Flocken sowie weniger als 10 Massen-% eines festen anionischen polymeren hydrophilen Kolloids, dadurch gekennzeichnet, dass das Kolloid beim Dispergieren in Wasser fähig ist, unter Bildung eines Sols zu hydratisieren, um die primären Flocken zu aggregieren, wobei die Hydratationsgeschwindigkeit kleiner ist als die Bildungsgeschwindigkeit der primären Flocken.

2. Zusammensetzung nach Anspruch 1, dadurch gekennzeichnet, dass das feste anorganische Metallsalz mit dreiwertigem Kation unter Aluminiumsulfat, Eisen(III) sulfat, chloriertem Eisenvitriol und Natriumaluminat ausgewählt ist.

3. Zusammensetzung nach Anspruch 1 oder 2, dadurch gekennzeichnet, dass das feste anionische polymere hydrophile Kolloid unter Polysacchariden, modifizierter Cellulose, Proteinen und Gummis ausgewählt ist.

4. Zusammensetzung nach Anspruch 1, dadurch gekennzeichnet, dass Aluminiumsulfat als das feste anorganische Metallsalz mit dreiwertigem Kation und Carboxymethylcellulose oder ein unbedenkliches Salz derselben als das feste anionische polymere hydrophile Kolloid vorliegt.

5. Zusammensetzung nach einem der Ansprüche 1 bis 4, dadurch gekennzeichnet, dass sie ein weiteres sekundäres polymeres hydrophiles Kolloid enthält, das ein festes nicht-ionisches oder anionisches organisches polymeres hydrophiles Kolloid darstellt, welches beim Dispergieren in Wasser fähig ist, ein sekundäres Sol zu bilden, um das ursprüngliche primäre Sol bei der Aggregierung der koagulierten Verunreinigungen zu unterstützen, und dessen Hydratationsgeschwindigkeit ebenfalls kleiner ist als die Bildungsgeschwindigkeit der primären Flocken.

6. Zusammensetzung nach einem der Ansprüche 1 bis 5, dadurch gekennzeichnet, dass es ein Bakterizid zu einem Anteil von etwa 5 Massen-% zum Desinfizieren des Wassers und/oder ein geeignetes weiteres Quellmittel in einer Menge von etwa 40 Massen-% enthält, das als Füllstoff und/oder Bindemittel zum Tablettieren wirken soll, um so die Gelierung des anionischen polymeren hydrophilen Kolloids zu verringern.

7. Zusammensetzung nach einem der Ansprüche 1 bis 6, dadurch gekennzeichnet, dass sie in Form einer Tablette vorliegt und das Alkali Natriumbicarbonat ist, das ferner als Brausemittel wirkt, damit die Tablette beim Einführen in Wasser aufbraust und so den Zerfall der Tablette fördert.

8. Zusammensetzung nach Anspruch 1, dadurch gekennzeichnet, dass sie aus

Aluminiumsulfat, etwa 30 Massen-%

Natriumbicarbonat (Pulver), etwa 20 Massen-%

Bakterizid, etwa 5 Massen-%

anionisch modifizierter Cellulose wie 7H0F und 7H3SF (Warenzeichen) von Hercules Inc. erhältlich, etwa 2 Massen-%

Bentonit als weiterem Quellmittel, etwa 40 Massen-%

amorphem Kieselsäurepräparat als weiterem Quellmittel (z.B. SYLOID — Warenzeichen), etwa 2 Massen-%

nicht-ionischem synthetischem Polymer (z.B. Polyacrylamid) als sekundärem hydrophilem Kolloid, bis zu 0,15 Massen-% besteht.

9. Verwendung einer Zusammensetzung nach einem der Ansprüche 1 bis 8 zur einstufigen diskontinuierlichen Reinigung eines verhältnismässig kleinen vorbestimmten Wasservolumens.

10. Verwendung nach Anspruch 9, dadurch gekennzeichnet, dass die Zusammensetzung in einer solchen Menge verwendet wird, dass feste Verunreinigungen im Wasser unter Bildung primärer Flocken koaguliert werden und die Konzentration des sich von der Zusammensetzung herleitenden Kolloids im Wasser etwa 10 mg/Liter beträgt.

**Revendications**

1. Une composition sous forme de dose unitaire pour la purification par lots en une étape d'un volume d'eau prédéterminé relativement petit et incluant, en mélange l'un avec l'autre, une combinaison d'un sel métallique minéral solide ayant un cation trivalent, et un alcali solide qui est soluble dans l'eau, comme coagulants pour coaguler rapidement des impuretés solides dispersées dans l'eau pour former des floculats primaires, et moins de 10% en masse d'un colloïde hydrophile polymère anionique solide, caractérisée en ce que le colloïde est capable, lorsqu'il est dispersé dans l'eau, de s'hydrater pour former un sol pour agréger les floculats primaires, et en ce qu'il s'hydrate à une vitesse plus lente que la vitesse de formation des floculats primaires.

2. Une composition selon la revendication 1, caractérisée en ce que le sel métallique minéral solide ayant un cation trivalent est choisi parmi le sulfate d'aluminium, le sulfate ferrique, la mélantérite chlorée et l'aluminate de sodium.

3. Une composition selon la revendication 1 ou 2, caractérisée en ce que le colloïde hydrophile polymère anionique solide est choisi parmi les polysaccharides la cellulose modifiée, les protéines et les gommes.

4. Une composition selon la revendication 1, caractérisée en ce que le sulfate d'aluminium est présent en tant que sel métallique minéral solide ayant un cation trivalent et en ce que de la carboxyméthylcellulose ou un sel acceptable de celle-ci est présent en tant que colloïde hydrophile polymère anionique solide.

5. Une composition selon l'une quelconque des revendications 1 à 4, caractérisée en ce qu'elle inclut un autre colloïde hydrophile polymère secondaire qui est un colloïde non-ionique solide ou un colloïde hydrophile polymère organique anionique capable, lorsqu'il est dispersé dans l'eau, de former un sol secondaire pour aider le sol primaire d'origine à agréger les impuretés coagulées, et qui s'hydrate aussi à une vitesse plus lente que la vitesse de formation des floculats primaires.

6. Une composition selon l'une quelconque des revendications 1 à 5, caractérisée en ce qu'elle contient un bactéricide dans une proportion d'environ 5% en masse pour désinfecter l'eau et/ou un agent de gonflement supplémentaire convenable dans une quantité d'environ 40% en masse pour servir de charge et/ou de liant pour la compression, ce qui diminue la gélification du colloïde hydrophile polymère anionique.

7. Une composition selon l'une quelconque des revendications 1 à 6, caractérisée en ce qu'elle est sous la forme d'un comprimé et en ce que l'alcali est le bicarbonate de sodium qui sert aussi d'effervescent pour fournir l'effervescence lorsque le comprimé est introduit dans l'eau, pour faciliter le désintégration du comprimé.

8. Une composition selon la revendication 1, caractérisée en ce qu'elle comprend:

sulfate d'aluminium, environ 30% (en masse) bicarbonate de sodium (poudre), environ 20% (en masse)

bactéricide, environ 5% (en masse)

cellulose modifiée anionique comme 7H0F et 7H3SF (noms de marque) fournie par Hercules Inc., environ 2% (en masse)

bentonite comme agent de gonflement supplémentaire, environ 40% (en masse)

composition de silice amorphe comme agent de gonflement supplémentaire (par exemple SYLOID — nom de marque), environ 2% (en masse)

polymère synthétique non-ionique (par exemple polyacrylamide) en tant que colloïde hydrophile secondaire, jusqu'à 0,15% (en masse)

9. L'emploi d'une composition selon l'une quelconque des revendications 1 à 8, pour le purification par lots en une étape d'un volume d'eau prédéterminé relativement petit.

10. L'emploi selon la revendication 9, caractérisé en ce que la composition est utilisée dans une quantité telle que les impuretés solides dans l'eau sont coagulées pour former des floculats primaires et en ce que la concentration du colloïde que l'on obtient à partir de la composition dans l'eau est d'environ 10 mg/litre.